**Europäisches Patentamt**

**European Patent Office**

**Office européen des brevets**

(19)

(11) Veröffentlichungsnummer: **0 128 561**
A2

(12) # EUROPÄISCHE PATENTANMELDUNG

(21) Anmeldenummer: **84106591.5**

(22) Anmeldetag: **08.06.84**

(51) Int. Cl.³: **G 01 B 7/00**

(30) Priorität: **09.06.83 IT 2153383**

(43) Veröffentlichungstag der Anmeldung: **19.12.84**
Patentblatt 84/51

(84) Benannte Vertragsstaaten: **DE FR GB**

(71) Anmelder: **Mecof S.p.A., Via Molino Casello Ovada, I-15070 Belforte Monferrato (IT)**

(72) Erfinder: **Oilearo, Giorgio, Via Canonico Boggio 3, I-10015 Ivrea (Torino) (IT)**

(74) Vertreter: **Mayer, Hans Benno, Via dell'Orso 7/A, I-20121 Milano (IT)**

(54) **Dreidimensionaler Taster.**

(57) Dreidimensionaler Taster, dessen Taststange entlang einer Achse Z verfahrbar von einem Aufnahmelager aufgenommen wird und mit einem Transduktor wirkverbunden ist, der während des Bewegungshubes des Tasters in Richtung der Achse Z beinflusst wird, dass der Taster von einem ersten Schlitten, der in Richung der Achse X bewegbar aufgenommen wird und ebenfalls mit einem Transduktor wirkverbunden ist, der während des Bewegungshubes in Richtung der Achse X beeinflussbar ist, und dass dieser erste Schlitten von einem zweiten Schlitten aufgenommen wird, der in Richtung der Y-Achse verfahrbar ist und analog mit einem Transduktor wirkverbunden ist, der während der Hubbewegung in Richtung der Achse Y beinflussbar ist.

0128561

Mecof S.p.A.

I - 15070 - Belforte Monferrato

Via Molino, Casello Ovada

"Dreidimensionaler Taster"

Die vorstehende Erfindung betrifft einen dreidimensionalen Taster, der insbesonders zum automatischen Abtasten dreidimensionaler Werkstuecke Verwendung findet und ein einziges Abtastorgan aufweist, das entlang der Hauptachsen X, Y und Z einer Bearbeitungsmaschine bewegbar ist und Steuersignale abgibt, die gleichzeitig von einem elektronischen Steuersystem, z.B. einer NC-Einheit verwertbar sind.

Es ist bereits ein dreidimensionaler Taster bekannt geworden, dessen Taststange in der Mitte einer elastischen Membrane angeordnet ist, wobei die Membrane an ihrem Aussenumfang fest eingespannt ist und somit eine Bewegung der Taststange entlang der Achsen X und Y ermoeglicht. Ferner wirkt in der bekannten Ausfuehrungsform die Taststange mit einer zwischengeschalteten Feder sowie einem Transduktor zusammen, der betaetigt wird, wenn die Taststange in Richtung der Achse Z verschoben wird.

0128561

Der Nachteil des bekannten Tasters, der mit einer elastischen Membrane zur Aufnahme der Taststange ausgeruestet ist, besteht im wesentlichen darin, dass der moegliche Tasthub der Taststange fuer saemtiche Achsen X, Y und Z einem Maximalwert entspricht, der um einen Wert von 1,0 mm liegt. Diese Tatsache fuehrt dazu, dass der bekannte Taster ausgesprochen empfindlich aufgrund der beschraenkten, durchfuehrbaren Hubbewegung ist. Diese eingeschraenkte Hubbewegung der Taststange setzt sehr kleine Abtastgeschwindigkeiten voraus, um einmal abrupte Richtungsaenderung entlang der abzutastenden Strecke rechtzeitig erkennen zu koennen, um ferner unerwuenschte Schwingungen der Tasterstange vermeiden zu koennen, die durch zu hohe Abtastgeschwindigikeiten hervorgerufen werden koennten. Somit wird durch den Einsatz der bekannten Tasteinrichtung der Wirkungsgrad der Bearbeitungsmaschine, die mit dieser Vorrichtung ausgestattet ist, wesentlich herabgesetzt. Diese Tatsache fuehrt zu negativen Auswirkungen, besonders wenn die abzutastenden Werkstuecke groessere Abmessungen aufweisen. Ein weiterer Nachteil des bekannten Tasters besteht darin, dass die Tasterstange eine Schwenkbewegung um ihren Aufhaengungspunkt (Zentrum der elatischen Membrane) ausfuehren kann, was zu Ungenauigkeiten in der Messung und zu unerwuenschten Schwingungsbewegungen fuehrt.

Aufgabe der vorstehenden Erfindung ist es, die dem Stand der Technik anhaftenden Nachteile zu vermeiden und einen neuen Praezisionstaster vorzuschlagen, dessen Tastbereich entlang den Achsen X, Y und Z wesentlich groesser ist, wodurch eine wesentlich groessere Geschwindigkeit fuer den Abtastvorgang ermoeglicht wird. Ferner soll die Moeglichkeit geschaffen werden, auch Werkstueckformen abzutasten, die abrupte Richtungsaenderungen in den drei Dimensionen aufweist, und dass hierbei keine Verminderung der Abtastgeschwindigkeit erforderlich sei.

Eine weitere Aufgabe der Erfindung besteht darin, eine neue Tastvorrichtung vorzuschlag, bei dem die Taststange niemals mit einer, gegenueber der Achse Z pendelnden Bewegung verfahren wird, und dass im Gegenteil dazu die Taststange stets koaxial zur Achse Z verbleibt und selbt in kritischen Situationen, ein Verfahren der Taststange parallel gegenueber den Achsen X, Y und Z ermoeglicht.

Die erfindungsgemaesse Aufgabe wird im wesentlichen dadurch geloest, dass die Taststange verschiebbbar entlang der Achse Z von einem Aufnahmelager aufgenommen wird, und mit einem Transduktor wirkverbunden ist, der waehrend des Bewegungshubes des Tasters in Richtung der Achse Z beeinflusst wird, dass die Tasterstange ferner von einem ersten Schlitten, der verschiebbar in Richtung der Achse X gelagert ist, aufgenommen wird, der ebenfalls mit einem Transduktor wirkverbunden ist, der waehrend des Bewegungshubes entlang der Achse X beeinflussbar ist und, dass der erste Schlitten von einem zweiten Schlitten aufgenommen wird, der in Richtung der Achse Y verschiebbar ist, und ebenfalls mit einem Transduktor wirkverbunden ist, der waehrend des Verschiebehubes entlang der Achse X beeinflussbar ist.

Weitere Vorteile der Erfindung koennen den Unteranspruechen, der nun folgenden Beschreibung und den Zeichungen entnommen werden. Der Erfindungsgegenstand wird nun genauer anhand eines Ausfuehrungsbeispieles beschrieben und in den beigefuegten Zeichnung dargestellt.

Es zeigen:

Fig. 1 die erfindungsgemaesse Tastvorrichtung im Laengsschnitt;

Fig. 2 schematisch die entlang der Achsen X und Y verfahrbaren Kreuzschlitten sowie eine zentrale Aufnahme fuer die in Richtung der Achse Z bewegliche Tasterstange;

Fig. 3 eine weitere Ausfuehrungsform der Kreuzschlitten, die ueber Schwenklaschen verbunden sind, und entlang der Achse X und Y verschiebbar sind, und mittig die in Richtung der Achse Z beweglich angeordnete Taststange aufnehmen;

Fig. 4 die Tastvorrichtung nach Fig. 1 im Querschnitt, entlang der Linie IV-IV der Fig. 1;

Fig. 5 im Schnitt ein Detail der Tasterstange gemaess der Fig. 1.

Fig. 6 eine weitere vorteilhafte Ausfuehrungsform des im Laengsschnitt dargestellten Tasters; und

Fig. 7 den Taster gemaess Fig. 6 im Schnitt entlang der Linie VI-VI der Fig. 6.

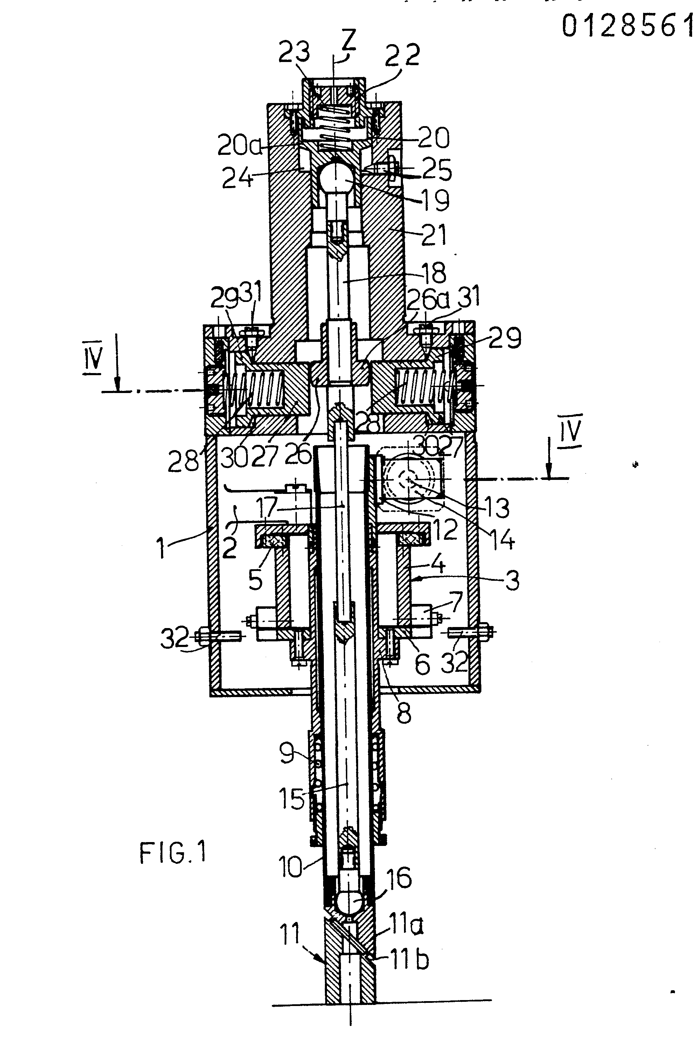

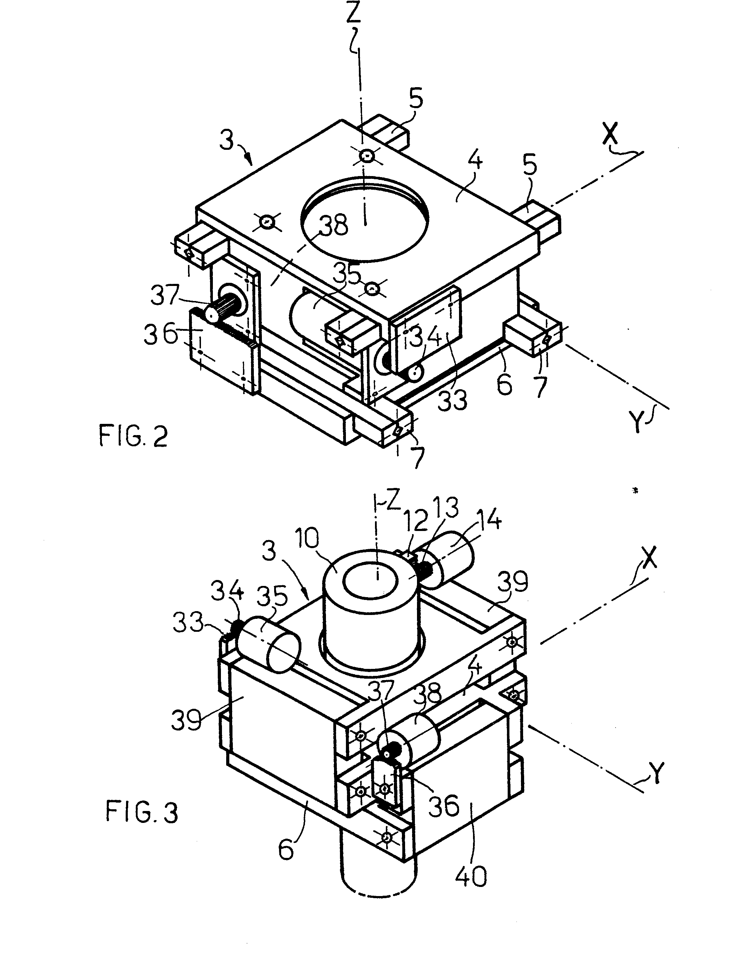

Wie der Fig. 1 zu entnehmen ist, wird in einem Gehaeuse 1 unter Zuhilfenahme von im Gehaeuseinneren angeordneten Halterungen 2 ein Kreuzschlitten gelagert, der gesamthaft mit 3 gekennzeichnet ist und aus einem ersten Teilschlitten 4 besteht, der laengs einer Kugel-oder Rollenfuehrung 5 verschiebbar ist, und aus einem zweiten Teilschlitten 6, der laengs einer Kugel- oder Rollenfuehrung 7 verschiebbar ist.

Die Kugelfuehrungen 5 sind senkrecht zu der Kugelfuehrung 7 angeordnet, somit wird ein Kreuzschlitten gebildet wird. Der Teilschlitten 6 nimmt ferner eine rohrfoermige Fuehrungshuelse 8 auf, in der, in vorteilhafter Weise unter Zwischenschaltung eines Kugelkaefigs, ein Rohr 10 aufgenommen wird, das in Axialrichtung (Achse Z) verschiebbar ist, und an seiner Unterseite eine Tasterstange aufweist, die gesamthaft mit 11 gekennzeichnet ist. An seiner Oberseite weist das Rohrstueck 10 ebenalls eine Zahnstange 12 auf, die mit einem Zahnrad 13 in Wirkverbindung steht, das Bestandteil eines Transduktors 14 oder eines aehnlichen Messmittels ist, das im Inneren des Gehaeuses 1 angeordnet ist.

Im Inneren des Rohrstueckes 10 ist ferner eine Fuehrungs- und Uebertragungsstange 15 vorgesehen, die an ihrer Unterseite in einer entsprechenden Ausnehmung ueber ein Kugelendstueck 16 gelagert ist.

Mit Hilfe eines Verbindungsstueckes 17 ist die Stange 15 mit einer weiteren Stange 18 verbunden, die an ihrem oberen Ende in einer Kugel endet, die in einer dafuer vorgesehenen Ausnehmung gelagert ist, die in eine verschiebbare Huelse 20 im Inneren einer Verlaengerung 21 des Gehaeuses 1 angeordnet ist.

Die Huelse 19 wird durch eine Verschlusschraube 22 in ihrer Lage festgelegt und, zwischen der Huelse 20 und der Verschlussschraube

0128561

22 ist ein Federmittel angeordnet, das mit mit 23 gekennzeichnet ist. Ferner weist die verschiebbare Huelse 20 eine Verdickung 22a auf, die waehrend des Abwaertshubes auf einen Absatz 24 trifft, der im Inneren der Verlaengerung 21 vorgesehen ist. In der Naehe des Absatzes 24 ist eine Feststellschraube 25 vorgesehen, die von der Aussenseite des Gehaeuses her betaetigbar ist.

Mit der Stange 18 steht ein Verbindungs- und Gleitstueck 26 in Verbindung, desses verdicktes Teil 26a die Form einer Scheibe aufweist, die mit den inneren Endflaechen kleiner Kolben 27 in Beruehrung steht. Die Kolben 27 sind mit ihren Achsen senkrecht zur Achse Z angeordnet. In vorteilhafter Weise sind vier Kolben 27 vorgesehen, die nach Art eines Kreuzes, jeweils um 90° zueinander versetzt, angeordnet sind. Die kleinen Kolben 27 werden ueber Federmittel 28 gegen die Verdickung 26a des Gleitstueckes 26 gedrueckt, und ferner weist jeder Kolben eine Endverdickung 29 auf, die gegen einen Anschlag 30 zu liegen kommt, der im Inneren des Gehaeuses vorgesehen ist. Aufgrund der um 90° zueinander versetzten Anordnung der Federn 28, erhaelt man eine selbsttaetige Zentrierung des Gleitstueckes 26 und somit der Stange 15, 17, 18, sowie der Tasterstange 11. Ferner sind die Federn 28 dazu geeignet, Pendelbewegungen aufgrund von auftretenden Kippmomenten oder anormalen Verformungen, die aufgrund von quergerichteten Beanspruchungen der Tasterstange 11 auftreten koennen, zu neutralisieren.

Beruecksichtigt man, dass die Federn in gegenueberliegender Lage

angeordnet sind, sich jedoch nicht gegensaetzlich beeinflussen, erfolgt dadurch eine Daempfung jeglicher Schwingung und jeglicher Pendelbewegung, die sich fuer die Tasterstange einstellen koennte. In Uebereinstimmung mit jeder Ausnehmung 30 ist ferner eine Einstellschraube 31 vorgesehen, die von der Aussenseite es Gehaeuses her betaetigbar ist. Auch in Uebereinstimmung mit dem Schlitten 4, bzw. dem Schlitten 6, sind Einstellschrauben 32 vorgesehen, die als einstellbare Endanschlaege fuer die beweglichen Teile dienen.

Die Tasterstange 11 weist in vorteilhafter Weise an ihrel unteren Ende eine um 45° geneigte Ringflaeche auf, die mit 11a bezeichnet ist. Auf dieser geneigten Ringflaeche ist unter Vorsehung einer ringfoermigen Gegenflaeche 11b das Endstueck der Tasterstange 11 aufgeklebt. Durch dieses Merkmal wird bei Auftreten zu starker Stoesse in horizontaler als auch in vertikaler Richtung erzielt, dass zwischen den Flaechen 11a und 11b eine Bruchtrennung auftritt. Hiermit wird eine Beschaedigung der Praezisionsvorrichtung, die im wesentlichen durch die Tasterstange 1 gebildet ist, vermieden.

Die Fig. 2 zeigt schematisch in perspektivischer Ansicht den Kreuzschlitten 3, wobei in dieser Darstellung aus Gruenden der Uebersichtlicheit das Rohrstueck 10, das entlang der Achse Z verschiebbar ist, die Zahnstange 12, das Zahnrand 13, sowie der Transduktor 14, der bei Bewegungen laengs der Achse Z betaetigt wird, fehlen.

Der Fig. 2 kann entnommen werden, dass auch mit dem Schlitten 4

0128561

eine Zahnstange 33 wirkverbunden ist, die auf ein Zahnrad 34 eines Transduktors 35 (Bewegung laengs der Achse X) einwirkt; auch der Schlitten 6, der entlang der Kugelfuehrung 7 verschiebbar ist, ist mit einer Zahnstange 36 ausgeruestet, die mit einem Zahnrad 37 in Wirkverbindung steht, das Bestandteil eines Transduktors 38 bildet (Bewegung laengs der Achse Y). Somit koennen ueber den Transduktor 14 Signale entsprechend der Bewegung in Richtung der Achse Z abgegeben werden; der Transduktor 35 gibt Signale entsprechend den Bewegungen laengs der Achse X ab, und der Transduktor 38 gibt Signale entsprechend den Bewegungen in Richtung der Achse Y ab.

Fig. 3 zeigt eine abgeaenderte Ausfuehrungsform des Kreuzschlittens 3a gegenueber dem Schlitten nach Fig. 2.

Wie im Detail der Fig. 3 zu entnehmen ist, nimmt der Schlitten 3 ein Rohrstueck 10 auf, das eine Zahnstange 12 aufweist, die auf ein Zahnrad 13 eines Transduktors 14 einwirkt. Unter Zuhilfenahme von Schwenklaschen 39, in der dargestellten Ausfuehrungsform ist der Schlitten 4 in Richtung der Achse X bewegbar, erfolgt der Antrieb ueber eine schwenkbar angeordnete Zahnstange, die die Form eines Zahnsektors 33 aufweist, der das Zahnrad 34 eines Transduktors 35 antreibt und, ueber ein weiteres Paar von Schwenklaschen 40, die verschwenkbare Schlitten 6 aufnehmen, erfolgt ueber einen Zahnsektor 36 ein Antrieb des Zahnrades 37 eines Transduktors 38 im Falle einer Bewegung in Richtung der Achse Y.

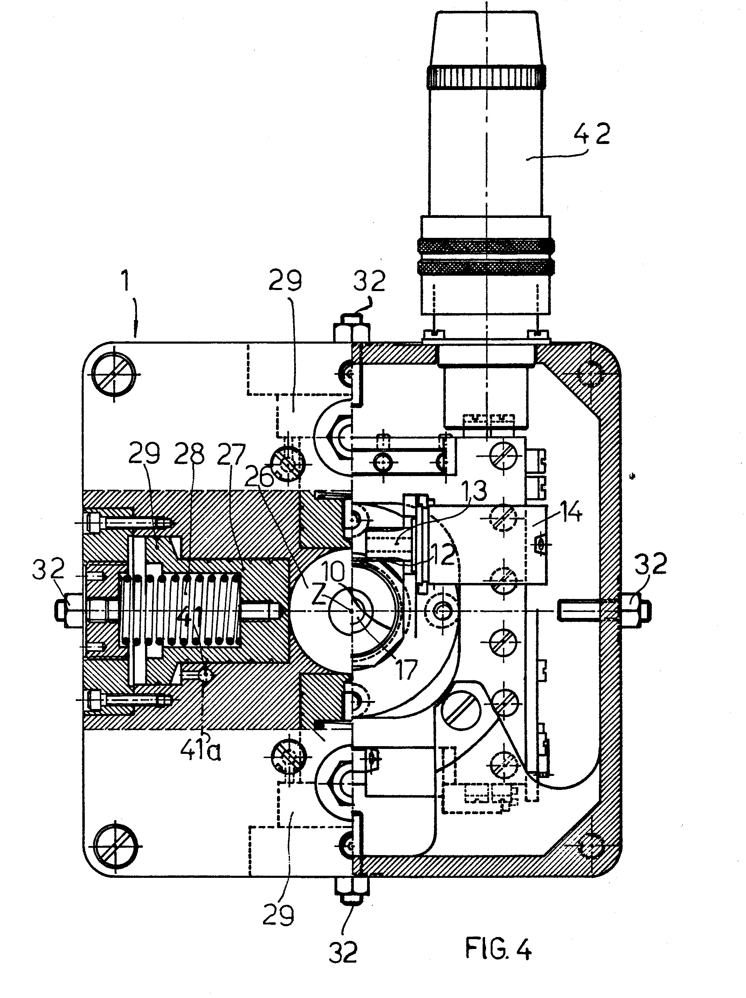

Wie der Fig. 4 zu entnehmen ist, nimmt das Gehaeuse 1 vier Kolben

0128561

27 - 29 auf, die untereinander um 90° versetzt angeordnet sind. Das vordere Ende eines jeden Kolbens 27 steht mit einem Gleitstueck 26 in Wirkverbindung, das die Form einer Scheibe aufweist und fest mit der Stange 17 verbunden ist, die im Inneren des Rohrstueckes 10 angeordnet ist, deren Ende die Zahnstange 12 aufweist, die mit dem Zahnrad 13 des Transduktors 14 (Achse Z) in Wirkverbindung steht.

Die Federn 28 sind bestrebt, den zugehoerigen Kolben 27 stets gegen das scheibenfoermige Gleitstueck 26 zu druecken, d.h. zur Mitte des Tasters hin. Jeder Zylinderraum, der einen entsprechenden Kolben aufnimmt, weist eine kleine Bohrung 41 auf, die es erlaubt, in bremsender Weise Luft in die Kammer einzusaugen und aus der Kammer der Kolben 27 auszustossen. Dadurch wird ein wuenschenswerter Daempfungseffekt erreicht, und dem Bestreben der Kolben 27 in Schwingungs- oder Pendelbewegung zu treten, wird entgegengewirkt.

In vorteilhafter Weise ist der Lufststrom im Kanal 41, unter Zuhilfenahme einer Einstellschraube 41a oder einem aehnlichen Einstellmittel regulierbar.

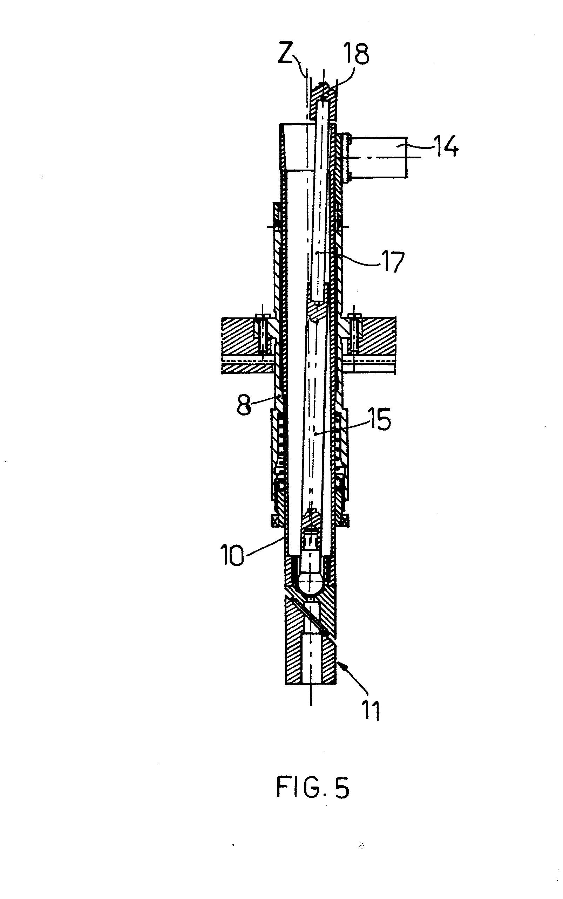

Alle Transduktoren 14, 35 und 38 stehen mit ihrem Ausgang in Wirkverbindung mit einem Stecker 42, der auf der Aussenseite des Gehaeuses 1 angeordnet ist, und in nicht dargestellter Weise zweigt vom Stecker 42 ein Verbindungskabel ab, das mit einer Kontroll- und Steuereinrichtung, z.B. einer NC-Einheit in Wirkverbindung steht. Dem in Fig. 5 dargestellten Detail kann entnommen werden, dass bei Verschieben der Taststange 11 in Richtung der Achsen X und Y, die Taststange stets parallel zur vertikalen Achse ausgerichtet bleibt, und keinerlei Schwenkbewegungen ausfuehrt, wie es hingen in bekannten Tastern der Fall ist. Die nicht zu vermeidende Schwenkbewegung gegenueber der fest angeordneten Struktur des Gehaeuses 1, wird durch die Fuehrungs- und Ausgleichsstange 15, 17, 18 durchgefuehrt, die im Inneren des Rohrstueckes 10 angeorndet ist, und einen derartigen Aufbau aufweist, dass sie eine geneigte Stellung im Inneren des Rohrstueckes 10 einnehmen kann.

Es hat sich ferner als vorteilhaft erwiesen, die Moeglichkeit vorzustehen, die Taststange 11 wenigstens in Richtung von zwei Maschinenachsen festlegen zu koennen, und somit lediglich Bewegungsfreiheit in Richtung einer nicht festgesetzten Achse zu ermoeglichen. Es ist moeglich, unter Zuhilfenahme von Feststellmittel, gleichzeitig die Achsen X und Y, die Achsen X und Z und die Achsen Y und Z zu blockieren. Somit kann die Tasterstange 11 lediglich in Richtung einer Achse, unabhaengig vom Auflagepunkt des Tasters und unabhaengig von der Form und der Oeberflaeche des Modellstueckes, sowie der Abtastbewegung, arbeiten, wodurch Kontrollvorgaenge an dreidimensionalen Werkstuecken (Modelle, Formen und aehnliches) durchfuehrbar sind.

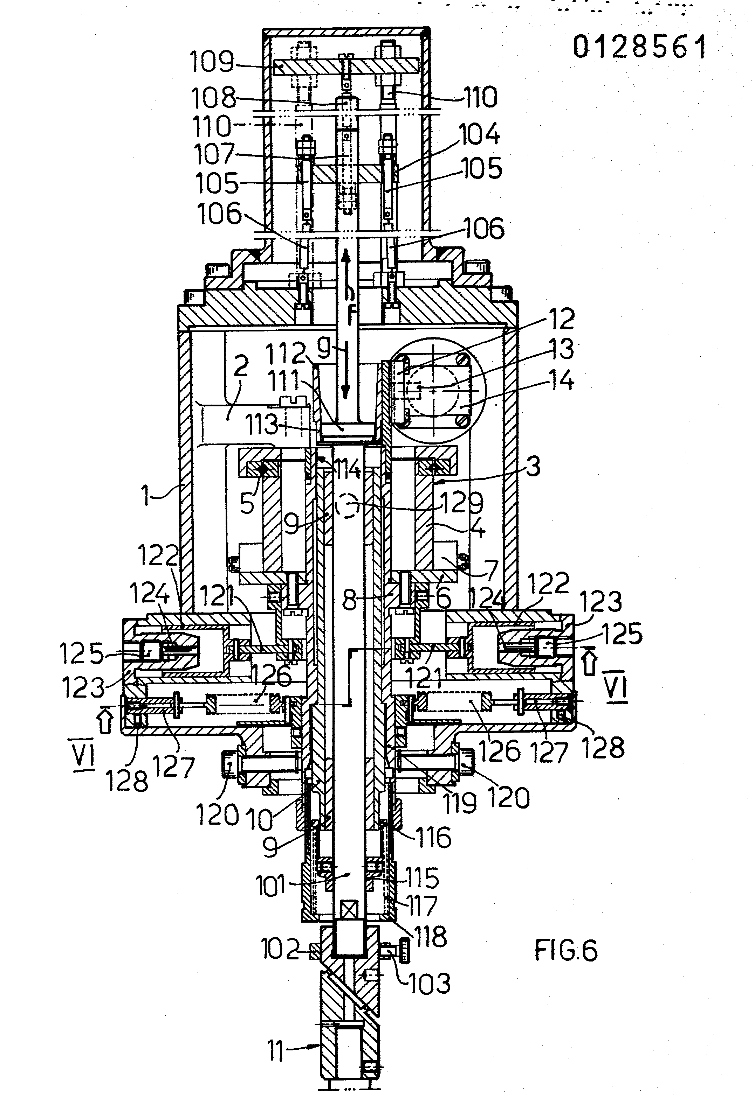

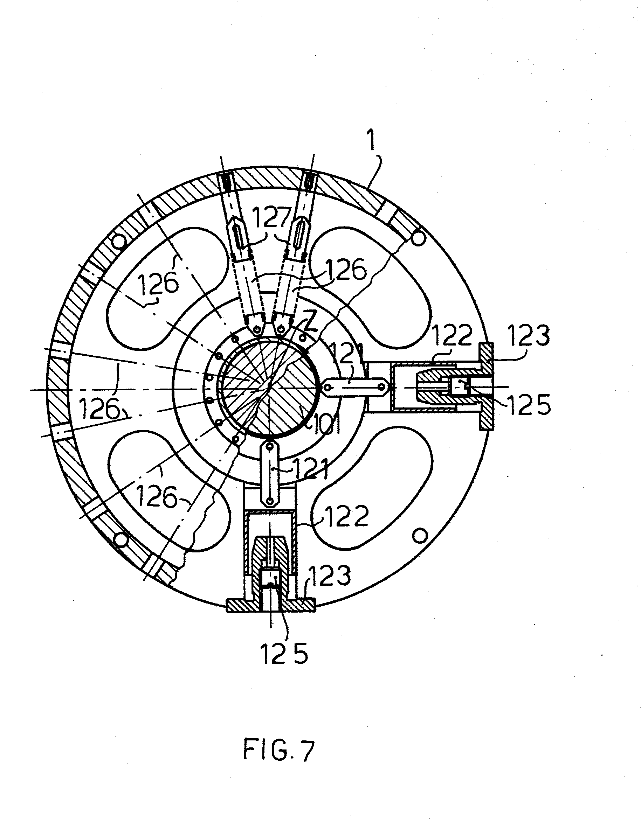

Den Figuren 6 und 7 ist eine weitere Ausfuehrungsform eines Tasters, der nach der erfindungsgemaessen Lehre aufgebaut ist, zu entnehmen.

Der in Fig. 6 dargestellte Taster 1, weist die Konstruktionselemente 1 - 14 auf, die im wesentlichen denen des in Fig. 1 dargestellten Tasters, der bereits beschrieben wurde, entsprechen. Unterschiedlich gegenueber der in Fig. 1 dargestellten Ausfuehrungsform, sind die Halte- und Rueckholmittel ausgebildet, die der gesamhaft mit 11 bezeichneten Tasterstange zugeordnet sind. Diese Mittel werden nun unter Verwendung von Bezugszeichen, die um Hundert vergroessert wurden, genauer beschrieben.

Wie der Fig. 6 zu entnehmen ist, nehmen die Kugelkaefige 9 eine Stange 101 auf, die einstueckig ausgebildet ist und sich ueber die gesamte Laenge des Tasters erstreckt und an ihrer Unterseite die Tastereinheit 11 aufnimmt. Auf der Tastereinheit 11 ist ein Stellring 102 angeordnet, der mit einer Schraube 103 zusammenarbeitet und als Endanschlag dient. An seiner Oberseite ist die Stange 101 mit einem Joch 104 versehen, die verschiebbar kleine Fuehrungsstangen 105 aufweist, die verschiebbar in eigens dafuer vorgesehenen Fuehrungen gleitet, die in das Joch 104 eingearbeitet sind, und mit Federmitteln 106 in Wirkverbindung stehen, die fest mit dem Gehaeuse des Tasters 1 verbunden sind, und dann beeinflussbar sind, wenn die Stange 101 nach oben in Richtung der Pfeiles f verschoben wird. Die Federn 105 erfuellen die Funktion von Rueckholmitteln. Mit dem Joch 104 stehen verschiebbar weitere Stangen 107 in Wirkverbindung, die um 90° gegenueber den Stangen 105 angeordnet sind, und ebenfalls fest mit den Federmitteln 108 verbunden sind, die mit einer Platte 109 wirkverbunden sind, die

0128561

fest mit Lagersaeulen 110 verbunden sind, die mit dem Gehaeuse 1 wirkverbunden sind. Die Federn 10 werden dann beeinflusst, wenn die Stange 101 nach unten bewegt wird, d.h. in Richtung des Pfeiles g; somit haben auch diese Mittel die Funktion von Rueckholmitteln. Gleichzeitig wirkt die Platte 109 als Bewegungsanschlag fuer die Stange 101 in Richtung des Pfeiles f. In vorteilhafter Weise weist die Stange 101 eine Verdickung 111 auf, mit der ein tassen- oder topffoermiger Koerper verbunden ist, der auf seiner Unterseite eine sich in Umfangsrichtung erstreckende Verjuengung 113 aufweist, die somit einen Anschlag bildet, der dann in Funktion tritt, wenn das die Verjuengung 113 aufweisende Teil in die obere Oeffnung 114 des gesamthaft mit 3 gekennzeichneten Kreuzschlittens eintritt.

Auf der Unterseite der Stange 101 ist ein tassen- oder topffoermiges Teil 115 angeordnet, das an seiner Oberseite einen umlaufenden, abstehenden Rand 116 aufweist, an dem ein Federmittel 117 anliegt, das in seiner Lage gehalten wird, und welches ueber einen Ring 118, der von der Unterseite des Rohrkoerpers 119 aufgeschraubt ist, einstellbar ist und die Stange 101 umgreift.

Die Feder 117 hat die Aufgabe, das Gewicht der Stange 101, sowie des Tasters 11 zu kompensieren, wenn die Vorrichtung 1 mit vertikal ausgerichteter Laengsachse zum Einsatz kommt.

In das Gehaeuse der Vorrichtung 1 sind Feststellschrauben 120 eingeschraubt, die es ermoeglichen, die Bewegung des Kreuzschlittens der gesamthaft mit 3 gekennzeichnet ist, in der

0128561

einen oder in der anderen Richtung verschiedener Achsen zu blockieren.

In vorteilhafter Weise, entsprechend dem Ausfuehrungsbeispiel nach Fig. 6 und 7, ist vorgesehen, dass der Kreuzschlitten 3 von Haltelaschen 121 getragen wird, die in einem Winkel von 90° um die Stange 111 angeordnet sind. Die Haltelaschen 121 sind gelenkig sowohl mit dem unteren Teil des Kreuzschlittens 3, der die Stange 101 umgibt, als auch mit kleinen Pneumatikzylindern 122 verbunden, die ebenfalls unter einem Winkel von 90° versetzt angeordnet sind, und verschiebbar vom Gehaeuse 1 des Tasters aufgenommen sind. Jeder Kolben 122, der tassenfoermig ausgebildet ist, kann in einem eigenen Zylindersitz des Gehaeuses 1 verschoben werden. Dieser Sitz wird durch eine Abschlusschraube 123 verschlossen. Durch Ausbilden der kleinen Kolben 122 in Form von tassenfoermigen Koerpern, wird ein innerer Raum gebildet, der waehrend der Verschiebung der kleinen Kolben 122 mit Luft gefuellt wird, die von der Aussenatmosphaere angesaugt wird, bzw. die angesaugte Luftmenge wird waehrend der Verschiebbebwegung der kleinen Kolben 122 nach aussen ausgestossen. Somit werden laufend (waehrend der Entfernung der Stange 101 von seiner Laengsachse Z) im Inneren der kleinen Kolben 122 Luftkissen gebildet, die als Daempfungsmittel dienen und eine unkontrollierte Schwenk- oder Vibrationsbewegung des Tasters 11 bei Rueckkehr desselben in seine Ursprungsstellung verhindern.

Um den Ansaugvorgang als den Ausstossvorganges des Luftkissens durch die kleinen Kolben 122 die tassenfoermige Form aufweisen,

- 15 -

0128561

einstellen zu koennen, sind in jede Absschlussschraube 123 jeweils eine Durchgangsbohrung eingearbeitet, die einen kleinen Ventilstoessel 123 aufweist, der Bestandteil eines mit einem Gewinde versehenen Kopfes 125 bildet, der in die Schraube 123 eingeschraubt ist. Durch mehr oder weniger betontes Einfuehren des Ventilstoessels 124 in den dafuer vorgesehenen Kanal wird es ermoeglicht, den Widerstand gegenueber der Ansaugphase bzw. gegenueber der Luftausstossphase aus dem Inneren des Kolbens 122 einzustellen und zu variieren.

Unter jedem Kolben 122 ist die Verlaengerung 119 des Kreuzschlittens 3 mit einer Anzahl von Federmitteln 126 wirkverbunden, die fest mit laschenartigen Gelenklagern 127 verbunden sind, deren Enden von entsprechenden Ausnehmungen des Gehaeuses 1 des Tasters aufgenommen werden. In diesen Ausnehmungen werden die Lager 127 (controllare) nach einem entsprechenden Einstell- und Eichvorgang, unter Zuhilfenahme eines Gewindestiftes 128 blockiert. Die Ferdern 126 und die entsprechenden Gelenklager 127 sind strahlenfoermig um die Stange 101 angeordnet. Die strahlenfoermige Anordnung der Federn 126, sowie der entsprechenden Gelenklager 127, sowie die Anordnung der vier Kolben, die gegeneinander um 90° versetzt angeordnet sind, ist der Zeichnung nach Fig. 7 deutlich zu entnehmen.

Werden z.B. sechzehn Federn 127 vorgesehen, die strahlenfoermig angeordnet sind, so entspricht der zwischen zwei Federn eingeschlossene Winkel ca. 22°, wodurch gewaehrleistet wird, dass

0128561

waehrend der Auslenkbewegung der Stange 101 immer eine ausreichende Anzahl von Federn gedehnt wird, um somit eine sichere Rueckholbewegung der Tasterstange in die Ruhestellung zu gewaehrleisten, in der die Tasterstange durch die Gesamtheit der Federn 120, die zu diesem Zwecke vorher eingetellt und geeicht wurden, zugewaehrleisten.

In vorteilhafter Weise liegt an einer Seite das Gehaeuse des Kreuzschlittens 3 auf der Kolbenstange 129 eines kleinen Pneumaitkzylinders auf. Der Zylinder steht in Wirkverbindung mit einem Druckregelventil, wodurch die Moeglichkeit gegeben wird, dass bei horizontaler Anordnung der Tastvorrichtung 1 das gesamte Gewicht des Kreuzschlittens, sowie der Tasterstange 101 von der Kolbenstange 129 aufgenommen wird. Unter Zuhilfenahme des Druckregelventiles (nicht dargestellt) wird es ermoeglicht, den Druck des Fluidums, der dem Pneumatikzylinder zugefuehrt wird, zu erhoehen oder zu verringern, wodurch die Moeglichkeit geschaffen wird, die Tasterstange 101 in Ruhestellung vollstaendig waagerecht anzuordnen, und gleichzeitig das Gewicht des Kreuzschlittens 3, sowie der Tasterstange 101 waehrend der Abtastphase auszugleichen.

Die Arbeitsweise der erfindungsgemaessen Tastvorrichtung ist folgende:

Dank der Vorsehung eines Kugelkaefigs 9 ist der Taster 11 jederzeit in der Lage, in Richtung der Achse Z leichtgaengig verschoben zu werden. Die Stange 15, 17 und 18 dient als Uebertragungs- und Fuehrungsmittel, die den Koerper 26, 26a aufnimmt, der von den Kolben 27, sowie von den zugeordneten Federn 28 beeinflusst wird.

Dank der Vorsehung des Kreuzschlittens 3, kann der Taster 11 auch eine weitraeumige Bewegung in Richtung der Achsen X und Y durchfuehren.

Sowohl waehrend der Verschiebung in Richtung der Achse Z als auch im Falle einer Verschiebung des Tasters 11 in Richtung der Achsen X und Y, werden die zugeordneten Transduktoren (14 fuer die Achse Z, 35 fuer die Achse X und 38 fuer die Achse Y) beeinflusst und diese Transduktoren uebertragen entsprechend der durchgefuehrten Bewegung proportionale Signale. Diese Signale muessen nicht unbedingt verstaerkt werden, sie werden einer Steuereinheit zugefuehrt, z.B. einer NC-Einrichtung, die diese Signale speichert oder weiter verarbeitet.

Die wesentlichen Vorteile der erfindungsgemaessen Tasteinrichtung sind in der Moeglichkeit zu sehen, eine sehr grosse Tastbewegung in Richtung der drei Achsen X, Y und Z durchfuehren zu koennen und eine sehr hohe Abtastgeschwindigkeit zuzulassen. Die Fuehrungen fuer die bewegbaren Baueinheiten der Vorrichtung sind ausgesprochen praezise und langlebig und erlauben eine sehr kompakte Bauform fuer den Taster, die geschuetzt in ihrem Inneren die Drehtransduktoren oder aehnliche Messmittel aufnimmt.

Dank der Verwendung von Drehtransduktoren wird es moeglich, proportionale Analogsignale abzugeben, die keinerlei Vorverstaerkung fuer die Uebertragung der Signale auf Distanz benoetigen, womit diese Signale ueber ein geeignetes Interface direkt jeder geeigneten NC-Einrichtung zufuehrbar sind.

Die Funktionsweise der Tasteinrichtung 1 nach Fig. 6 und 7 entspricht im Prinzip der Funktionsweise der bisher beschriebenen Tastvorrichtung jedoch, dank der Vorsehung der Schwenklaschen 121, die sowohl mit dem Kreuzschlitten als auch mit den kleinen Kolben 121 verbunden sind, und gegeneinander um 90° versetzt vorgesehen sind, wird eine genauere Lagerung erhalten und, dank der Vorsehung der Federmittel 126, die sternfoermig angeordnet sind, wird eine schnelle Rueckholbewegung der Tasterstange 101 in desssen mittige Stellung erreicht; durch Vorsehen der Kolben 122 und die Bildung von Luftkissen im Inneren dieser Kolben, wird eine Bewegungsdaempfung erzielt, ohne die Erzeugung von Schwingungen und stoerenden Pendelbewegungen.

Ferner wird noch vorgesehen, dass die Federn 106 und 107 zwischen dem Gehaeuse der Tastvorrichtung 1 und der beweglichen Stange 101 vorgesehen sind, somit wird zusaetzlich erreicht, dass die Stange 101 sehr schnell in ihre Ausgangslage zurueckgerufen wird. Durch Vorsehen eines Einstellringes 18, der Federmittel 117 aufnimmt, besteht die Moeglichkeit, die Federkraft der Feder 117 einzustellen, wodurch einfach und schnell ein Ausgleich entsprechend dem Gewicht der Stange 101, sowie des gesamten Tasters 11 vornehmbar ist.

0128561

### Patentansprueche

1. Dreidimensionaler Taster, dadurch gekennzeichnet, dass die Tasterstange (11) verschiebbar in Richtung der Achse (Z) von einem Schiebelager (8,9) aufgenommen wird und mit einem Transduktor (14) wirkverbunden ist, der waehrend der Verschiebung der Tasterstange (11) in Richtung der Achse (Z) betaetigt wird, dass ferner der Taster (1) von einem ersten Schlitten (4) , der in Richtung der Achse (X) verschiebbar gelagert ist, aufgenommen wird, dass dieser Schlitten (4) ebenfalls mit einem Transduktor (35) wirkverbunden ist, der waehrend der Verschiebung in Richtung der Achse (X) antriebbar ist, und dass dieser erste Schlitten (4) von einem zweiten Schlitten (6) aufgenommen wird, der in Richtung der Achse (Y) verschiebbar ist, und ebenfalls mit einem Transduktor (38) wirkverbunden ist, der waehrend der Verschiebung in Richtung der Achse (Y) antreibbar ist.

2. Taster, nach Patentanspruch 1, dadurch gekennzeichnet, dass der erste (4) und zweite Schlitten (6) eine Kreuzschlitteneinheit (3) bilden, die die Tasterstange (11) und die zugeordneten Transduktoren (14,35,38) aufnimmt und in ihrer Gesamtheit im Inneren eines Gehaeuses (1) angeordnet ist.

3. Taster, nach Patentanspruch 1, dadurch gekennzeichnet, dass die Schlitten (4,6) sowie die Tasterstange (11) verschiebbar unter Zuhilfenahme von Kugelfuehrungen, Rollenfuehrungen (5) oder Kugelkaefigen (9) gelagert sind.

4. Taster, nach Patentanspruch 1, dadurch gekennzeichnet, dass die in Richtung der Achse (Z) bewegliche Tasterstange (11) unter Zwischenschaltung von Gleit- und Laufeinrichtungen (9) von einem Rohrstueck (8) aufgenommen wird, das mit der Kreuzschlitteneinheit (3) wirkverbunden ist und, dass dieses Rohrstueck (8) an seinem, zum Gehaeuseinneren hin gerichteten Ende eine Zahnstange (12) aufweist, die mit dem Zahnrad (13) eines Transduktors (14) wirkverbunden ist.

5. Taster, nach Patentanspruch 1 und 4, **dadurch gekennzeichnet,** dass das aus dem Gehaeuse (1) vorstehene Ende des Rohrstueckes (8) in seinem Inneren eine Ausnehmung aufweist, die einen Kugelkopf (16) einer Fuehrungs- und Ausgleichsstange (17) aufnimmt, dessen oberes Ende in einer kugelfoermigen Verdickung (19) endet, die in einer Ausnehmung gelagert ist, die in einer Huelse (20) vorgesehen ist, die verschiebbar im Inneren (24) einer Verlaengerung (21° des Gehaeuses (1) vorgesehen ist und durch Federmittel (23) beaufschlagt ist.

6. Taster, nach Patentanspruch 5, **dadurch gekennzeichnet,** dass die verschiebbar gelagerte und durch Federmittel (23) beaufschlagte Huelse (20) eine Verdickung (20a) aufweist, die als Anschlag zum Auflaufen auf einen Absatz (24) im Inneren der Verlaengerung (21) des Gehaeuses (1) dient.

7. Taster, nach Patentanspruch 6, **dadurch gekennzeichnet,** dass der verschiebbaren Huelse (20) , die die Fuehrungs- und Ausgleichsstange (18) aufnimmt, eine Einstell- und Blockierschraube (25) zugeordnet ist.

0128561

8. Taster, nach Patentanspruch 1, **dadurch gekennzeichnet**, dass mit der Stange (17,18) ein Beruehrungs- und Gleitelement (26) verbunden ist, das eine scheibenfoermige Verdickung (26a) aufweist, die mit den inneren Endflaechen von Kolben (27) in Wirkverbindung steht, die im Inneren des Gehaeuses (1° senkrecht zur Z-Achse angeordnet sind und, dass diese Kolben (27) in vorteilhafter Weise kreuzweise, um 90° zueinander versetzt, angeordnet sind.

9. Taster, nach Patentanspruch 8, **dadurch gekennzeichnet**, dass zwischen dem Gehaeuse (1) und den Kolben (27) Federmittel (28) vorgesehen sind, die die Kolben (27) in Richtung auf die Z-Achse hin beeinflussen.

10. Taster, nach Patentanspruch 8, **dadurch gekennzeichnet**, dass jeder Kolben (27) am Ende eine Verdickung (29) aufweist, die gegen eine Schulter (30) anschlaegt, die vom Gehaeuse (1) des Tasters gebildet wird.

11. Taster, nach Patentanspruch 8, **dadurch gekennzeichnet**, dass jedem verschiebbaren Kolben (27) eine Einstell- und Blockierschraube (31) zugeordnet ist.

12. Taster, nach Patentanspruch 8, **dadurch gekennzeichnet**, dass jeder Zylinderraum, der den entsprechenden verschiebbaren Kolben (27) aufnimmt, einen Kanal (41) aufweist, der mit der freien Atmosphaere in Verbindung steht, und dass diesem Kanal (41) eine Einstellschraube (41a) zum Veraendern des wirksamen Querschnittes des Kanals zugeordnet ist.

13. Taster, nach Patentanspruch 1, **dadurch gekennzeichnet**, dass

0128561

den einzelnen Schlitten (4,6), die die Kreuzschlitteneinheit (3) bilden, Einstell- und Blockierschrauben (32) zugeordnet sind.

14. Taster, nach Patentanspruch 1, **dadurch gekennzeichnet**, dass das Ende der Tasterstange (11) als Ringflaeche (11a) ausgebildet ist, die um 45° geneigt ist, und eine ringfoermige Gegenflaeche (11b) des Endstueckes des Tasterfingers (11) durch Klebung aufnimmt.

15. Taster, nach Patentanspruch 1, **dadurch gekennzeichnet**, dass mit dem in Richtung der Achse (X) beweglich angeordneten Schlitten (4) eine Zahnstange (33) wirkverbunden ist, die auf einen Transduktor (35) einwirkt.

16. Taster, nach Patentanspruch 1, **dadurch gekennzeichnet**, dass mit der in Richtung der Y-Achse beweglichen Schlitten (6) eine Zahnstange (36) verbunden ist, die auf einen Transduktor (38) einwirkt.

17. Taster, nach Patentanspruch 1, **dadurch gekennzeichnet**, dass der erste und zweite Schlitten (4,6), die den Kreuzschlitten (3) bilden, untereinander ueber Schwenklaschen (39) verbunden sind.

18. Taster, nach Patentanspruch 16, **dadurch gekennzeichnet**, dass der Schwenklasche (39) eines jeden Schlittens (4,6) ein Zahnsegment (33,36) zugeordnet ist, das mit einem Zahnrad (34, 37) eines Transduktors (35,38) in Wirkverbindung steht.

19. Taster, nach Patentanspruch 1, **dadurch gekennzeichnet**, dass die Ausgaenge saemtlicher Transduktoren (14,35,38) in einem Verbindungstecker (42) zusammenlaufen, der aus dem Tastergehaeuse

0128561

(1) herausfuehrt.

20. Taster, nach Patentanspruch 1, **dadurch gekennzeichnet**, dass der Kreuzschlitten (3) gelenkig mit Haltelaschen (121) verbunden ist, die mit kleinen Pneumatikzylindern (122) wirkverbunden sind, welche in Ausnehmungen des Tastergehaeuses (1) angeordnet sind und jeweils um 90° zueinander versetzt vorgesehen sind.

21. Vorrichtung nach Patentanspruch 19, **dadurch gekennzeichnet**, dass die Pneumatikkolben (122) tassenfoermig ausgebildet sind und, dass jede Kammer, die den tassenfoermigen Kolben (122) aufnimmt, durch eine Abschlussschraube (123) geschlossen ist, die eine Durchgangsbohrung aufweist und einen Ventilstoessel (125) aufnimmt, der Bestandteil eines Gewindestiftes ist, der in die Abschlussschraube (123) eingedreht ist.

22. Taster, nach Patentanspruch 20, **dadurch gekennzeichnet**, dass die Verlaengerung des Kreuzschlittens (3), bzw. die Aussenseite (119) des Tasters (11) mit einer Anzahl von Federmittel (126) verbunden sind, die fest mit Gelenklaschen (127) verbunden sind, deren Enden mit dem Gehaeuse (1) der Tastvorrichtung in Verbindung stehen.

23. Taster, nach Patentanspruch 22, **dadurch gekennezeichnet**, dass die Ende der Gelenklaschen (127), die mit den Federmitteln (126) verbunden sind, einstellbar (128) in eigenen Ausnehmungen aufgenommen sind, die in das Gehaeuse (1) der Tastvorrichtung eingearbeitet sind.

24. Taster, nach Patentanspruch 22, **dadurch gekennzeichnet**, dass die Federmittel (126) mit den entsprechenden Gelenklaschen (127) strahlenfoermig angeordnet sind, und untereinander einen Winkel von ungefaehr 22° einschliessen. (Fig. 7)

25. Taster, nach Patentanspruch 20, **dadurch gekennzeichnet**, dass in der Horizontalstellung das Gehaeuse des Kreuzschlittens (3) mit einer Seite auf der Kolbenstange (129) eines Pneumatikzylinders aufliegt, und dass dieser Zylinder mit einem Druckregelventil in Wirkverbindung steht.

26. Taster, nach Patentanspruch 20, **dadurch gekennzeichnet**, dass auf der Unterseite des Tasterfingers eine tassenfoermige Huelse (115) vorgesehen ist, die einen Umfangsrand (116) aufweist, gegen den ein Federmittel (117) anliegt, das ueber einen Gewindering (118) einstellbar in seiner Stellung gehalten wird.

FIG.1

FIG. 2

FIG. 3

0128561

FIG. 4

0128561

FIG. 5

0128561

FIG.6

0128561

FIG. 7